# EUROPEAN PATENT APPLICATION

(11) **EP 4 366 072 A1**
(43) Date of publication of application: **08.05.2024**
(21) Application number: 23198743.9
(22) Date of filing: 21.09.2023
(51) Int. Cl.: H01M 50/552, H01M 50/553, H01M 50/567

(54) **BATTERY AND STRADDLED VEHICLE**

(30) Priority: 12.10.2022 JP 2022163907
(71) Applicant: Yamaha Hatsudoki Kabushiki Kaisha, Iwata-shi, Shizuoka-ken 438-8501 (JP)
(72) Inventor: WEI, Kaicheng, Iwata, 438-8501 (JP)
(74) Representative: Studio Torta S.p.A.

(57) **Abstract**

There is descried a battery (21) and a straddled vehicle (1); the battery (21) including a battery terminal (25), a nut (42), and a clip member (51); the battery terminal (25) having an internal space (27); the nut (42) being placed in the internal space (27). the clip member (51) being attached to and detached from the battery terminal (25) by using elastic deformation of the clip member (51); when the clip member (51) is attached to the battery terminal (25), the clip member (51) prohibiting the nut (42) from moving from the internal space (27) to the outside of the battery terminal (25); when the clip member (51) is detached from the battery terminal (25), the clip member (51) allowing the nut (42) to move between the internal space (27) and the outside of the battery terminal (25).

## Description

### Technical field

The present invention relates to a battery and a straddled vehicle.

### Prior Art

JP H02-145767 U discloses a battery. The battery includes a battery terminal, a nut anti-slipping member, and a nut. The battery terminal has a nut insertion hole. The nut insertion hole is a space in which a nut can be accommodated. The nut insertion hole is positioned inside the battery terminal. The nut insertion hole penetrates the battery terminal. The nut anti-slipping member is disposed at the entrance of the nut insertion hole. The nut anti-slipping member is, for example, a step. The nut anti-slipping member protrudes upward from a bottom wall of the nut insertion hole, for example. For example, the nut anti-slipping member is molded integrally with the battery terminal. For example, the nut anti-slipping member and the battery terminal are inseparable from each other.

The nut anti-slipping member is small. The nut anti-slipping member is, for example, low. Therefore, the nut can pass above the nut anti-slipping member and pass through the entrance of the nut insertion hole. The nut anti-slipping member allows the nut to move between the nut insertion hole and the outside of the battery terminal. In other words, the nut anti-slipping member does not prohibit the nut from moving between the nut insertion hole and the outside of the battery terminal. Therefore, the nut can be inserted into the nut insertion hole.

When the nut sinks with respect to the nut anti-slipping member, the nut hardly gets over the nut anti-slipping member. When the nut sinks with respect to the nut anti-slipping member after the nut is inserted into the nut insertion hole, the nut comes into contact with the nut anti-slipping member. When the nut comes into contact with the nut anti-slipping member, the nut hardly moves from the nut insertion hole to the outside of the battery terminal. When the nut comes into contact with the nut anti-slipping member, the nut hardly falls off from the nut insertion hole.

After the nut is inserted into the nut insertion hole, the battery terminal is connected to an external terminal. The nut placed in the nut insertion hole is used for connecting the battery terminal and the external terminal. The external terminal is, for example, a lead terminal.

The maintenance of the battery includes, for example, replacement of the battery. The replacement of the battery includes the following operations. First, the external terminal is removed from the battery terminal. Next, the used battery is removed from a vehicle, and a new battery is mounted on the vehicle. Here, the nut may be removed from the used battery, and the nut may be reused for the new battery. Specifically, in the used battery, the nut in the nut insertion hole is raised from the nut anti-slipping member, and the nut is moved from the nut insertion hole to the outside of the battery terminal through the entrance. Then, the nut is inserted into the nut insertion hole of the new battery. Finally, the nut in the nut insertion hole is used to couple the external terminal to the battery terminal of the new battery.

The maintenance of the battery includes, for example, replacement of the nut. The replacement of the nut is performed, for example, when the nut is damaged or when the nut corrodes. The replacement of the nut includes the following operations. First, the external terminal is removed from the battery terminal. Next, the used nut is taken out from the nut insertion hole to the outside of the battery terminal. Then, a new nut is inserted into the nut insertion hole. Finally, the new nut in the nut insertion hole is used to couple the external terminal to the battery terminal.

In this way, it is easy to maintain the battery. The battery has good maintainability.

The nut anti-slipping member does not prohibit the nut from moving from the nut insertion hole to the outside of the battery terminal. Therefore, the nut may fall off from the battery terminal. For example, after inserting the nut into the nut insertion hole and before connecting the external terminal to the battery terminal, the nut may get over the nut anti-slipping member and move from the nut insertion hole to the outside of the battery terminal. The nut is more likely to fall off from the battery terminal as the battery is more inclined.

The present invention has been made in view of such circumstances, and an object of the present invention is to provide a battery and a straddled vehicle that prevent a nut from falling off. An object of the present invention is to provide a battery that prevents a nut from falling off, and a straddled vehicle including the battery.

One method to prevent the nut from falling off is to fix a lid member to the battery terminal. The lid member has, for example, a plate shape. Hereinafter, fixing the lid member to the battery terminal is referred to as a "first method". In the first method, the connection between the battery terminal and the external terminal includes, for example, the following operations. First, the nut is inserted into the nut insertion hole. Subsequently, the lid member is fixed to the battery terminal. Specifically, the lid member is attached to the battery terminal via an adhesive. Then, the processing waits until the curing time of the adhesive elapses. After the curing time of the adhesive has elapsed, the lid member is appropriately fixed to the battery terminal. When the lid member is fixed to the battery terminal, the lid member closes the nut insertion hole. When the lid member is fixed to the battery terminal, the lid member prohibits the nut from moving from the nut insertion hole to the outside of the battery terminal. Finally, the external terminal is connected to the battery terminal using the nut in the nut insertion hole.

However, in the first method, the adhesive is used to fix the lid member to the battery terminal. Therefore, in the first method, it takes a lot of work and a long time to attach the lid member to the battery terminal. Therefore, in the first method, it takes a lot of work and a long time to connect the battery terminal and the external terminal. In short, the first method does not allow simple connection between the battery terminal and the external terminal.

Further, in the first method, it is difficult to remove the lid member from the battery terminal. Therefore, it is difficult to take out the nut from the nut insertion hole to the outside of the battery terminal after attaching the lid member to the battery terminal. Therefore, in the first method, it is difficult to reuse the nut when replacing the battery. In the first method, it is difficult to replace the nut. In short, in the first method, the battery does not have good maintainability. The first method deteriorates maintainability of the battery. The first method makes battery maintenance difficult.

### Description of the invention

Therefore, the present inventor has further studied a battery that prevents the nut from falling off, allows simple connection between the battery terminal and the external terminal, and has good maintainability.

The present invention is based on these studies. The present invention is constituted as stated below.

That is, the present invention provides a battery, including:
a battery terminal having an internal space,
a nut placed in the internal space, and
a clip member to be attached to and detached from the battery terminal by using elastic deformation of the clip member, and
when the clip member is attached to the battery terminal, the clip member prohibits the nut from moving from the internal space to the outside of the battery terminal, and
when the clip member is detached from the battery terminal, the clip member allows the nut to move from the internal space to the outside of the battery terminal.

The battery includes the battery terminal, the nut, and the clip member. The battery terminal has the internal space. The nut is placed in the internal space. The clip member is attached to and detached from the battery terminal. When the clip member is attached to the battery terminal, the clip member prohibits the nut from moving from the internal space to the outside of the battery terminal. Therefore, in a state where the clip member is attached to the battery terminal, the battery prevents the nut from falling off.

The clip member is attached to and detached from the battery terminal by using elastic deformation of the clip member. Therefore, it is easy to attach the clip member to the battery terminal. Specifically, the clip member is attached to the battery terminal with less work and in a short time. Therefore, the battery allows simple connection between the battery terminal and the external terminal.

As described above, the clip member is attached to and detached from the battery terminal by using elastic deformation of the clip member. Therefore, it is easy to detach the clip member from the battery terminal. Specifically, the clip member is detached from the battery terminal with less work and in a short time. When the clip member is detached from the battery terminal, the clip member allows the nut to move between the internal space and the outside of the battery terminal. Therefore, in a state where the clip member is detached from the battery terminal, it is easy to take out the nut from the internal space to the outside of the battery terminal. In a state where the clip member is detached from the battery terminal, it is easy to insert the nut from the outside of the battery terminal into the internal space. Therefore, for example, even after the clip member is attached to the battery terminal, it is easy to detach the clip member from the battery terminal and take out the nut from the internal space. Therefore, maintenance of the battery is easy. That is, the battery has good maintainability.

As described above, according to the battery, the nut is prevented from falling off. Further, the battery allows simple connection between the battery terminal and the external terminal. The battery has good maintainability.

It is preferred in the battery described above that
the battery terminal includes
a first plate that is in contact with the internal space, and
a second plate that is connected to the first plate, is substantially orthogonal to the first plate, and is in contact with the internal space, and
the clip member is attached to and detached from the first plate.

The battery terminal includes the first plate and the second plate. The second plate is connected to the first plate. The second plate is substantially orthogonal to the first plate. The first plate is in contact with the internal space. The second plate is in contact with the internal space. In other words, each of the first plate and the second plate defines the internal space. Therefore, the battery terminal suitably has the internal space. The clip member is attached to and detached from the first plate. Therefore, the clip member is suitably attached to and detached from the battery terminal.

It is preferred in the battery described above that
the clip member includes
a first clamp, and
when the clip member is attached to the battery terminal, the first clamp clamps the first plate.

The clip member includes the first clamp. When the clip member is attached to the battery terminal, the first clamp clamps the first plate. Therefore, it is easy to attach and detach the clip member to and from the battery terminal.

It is preferred in the battery described above that
the first clamp has a hook shape.

Therefore, it is easy for the first clamp to clamp the first plate.

It is preferred in the battery described above that
the first plate includes
an inner surface that is in contact with the internal space, and
an outer surface opposite to the inner surface, and
when the clip member is attached to the battery terminal, the first clamp is in contact with the inner surface of the first plate and the outer surface of the first plate.

The first plate has the inner surface and the outer surface. The inner surface is in contact with the internal space. The outer surface is positioned opposite the inner surface. The outer surface is not in contact with the internal space. The outer surface is in contact with the outside of the battery terminal. When the clip member is attached to the battery terminal, the first clamp contacts both the inner surface of the first plate and the outer surface of the first plate. Therefore, it is easy for the first clamp to clamp the first plate.

It is preferred in the battery described above that
when the clip member is attached to the battery terminal, a part of the first clamp enters the internal space.

Therefore, when the clip member is attached to the battery terminal, it is easy for the first clamp to clamp the first plate. Further, when the clip member is attached to the battery terminal, it is easy for the first clamp to prohibit the nut from moving from the internal space to the outside of the battery terminal.

It is preferred in the battery described above that
the clip member includes
a second clamp, and
a connecting portion that connects the first clamp and the second clamp, and
when the clip member is attached to the battery terminal, the second clamp clamps the first plate.

The clip member includes the second clamp. When the clip member is attached to the battery terminal, the second clamp clamps the first plate. Therefore, it is easy to attach and detach the clip member to and from the battery terminal. The clip member includes the connecting portion. The connecting portion connects the first clamp and the second clamp. Therefore, it is easy to attach and detach both the first clamp and the second clamp to and from the first plate. Therefore, it is easier to attach and detach the clip member to and from the battery terminal.

It is preferred in the battery described above that
the internal space includes
a first opening positioned at a first end of the internal space, and
a second opening positioned at a second end of the internal space,
the first plate includes
a first side in contact with the first opening, and
a second side in contact with the second opening, and
when the clip member is attached to the battery terminal, the first clamp clamps the first side, and the second clamp clamps the second side.

Therefore, when the clip member is attached to the battery terminal, the clip member clamps both the first side and the second side. Therefore, the clip member is firmly attached to the battery terminal.

It is preferred in the battery described above that
when the clip member is attached to the battery terminal, a part of the first clamp preferably enters the internal space through the first opening, and a part of the second clamp enters the internal space through the second opening.

Therefore, it is easy for the first clamp to clamp the first side. Further, when the clip member is attached to the battery terminal, it is easy for the first clamp to prohibit the nut from passing through the first opening. For example, when the clip member is attached to the battery terminal, it is easy for the first clamp to prohibit the nut from moving from the internal space to the outside of the battery terminal through the first opening. Similarly, it is easy for the second clamp to clamp the second side. Further, when the clip member is attached to the battery terminal, it is easy for the second clamp to prohibit the nut from passing through the second opening. For example, when the clip member is attached to the battery terminal, it is easy for the second clamp to prohibit the nut from moving from the internal space to the outside of the battery terminal through the second opening.

It is preferred in the battery described above that
a separation distance between the first clamp and the second clamp is shorter than a distance between the first side and the second side.

When the clip member is attached to the battery terminal, a movable range of the nut in the internal space is limited to a range between the first clamp and the second clamp. That is, when the clip member is attached to the battery terminal, the separation distance between the first clamp and the second clamp corresponds to the movable range of the nut. As described above, the separation distance is shorter than the distance between the first side and the second side. Therefore, when the clip member is attached to the battery terminal, the movable range of the nut is relatively small. Therefore, when the clip member is attached to the battery terminal, the clip member appropriately limits the movement of the nut in the internal space.

It is preferred in the battery described above that
the first opening is larger than the first clamp, and
the second opening is larger than the second clamp and smaller than the first clamp.

The first opening is larger than the first clamp. Therefore, the first clamp can be inserted into the first opening. Therefore, the first clamp is allowed to clamp the first side. The second opening is larger than the second clamp. Therefore, the second clamp can be inserted into the second opening. Therefore, the second clamp is allowed to clamp the second side. The second opening is smaller than the first clamp. Therefore, it is not possible to insert the first clamp into the second opening. Therefore, the first clamp is prohibited from clamping the second side. Here, the first clamp clamping the second side corresponds to erroneous connection between the clip member and the first plate. Therefore, erroneous connection between the clip member and the first plate is reliably prevented.

It is preferred in the battery described above that
the battery terminal has a first through hole penetrating the first plate,
the clip member includes a pin, and
when the clip member is attached to the battery terminal, the pin is inserted into the first through hole.

Therefore, when the pin is inserted into the first through hole, the pin restricts the movement of the clip member with respect to the battery terminal. When the pin is inserted into the first through hole, the pin holds the clip member in an appropriate position with respect to the first plate.

It is preferred in the battery described above that
the battery terminal has a second through hole penetrating the second plate, and
the battery includes
a bolt inserted into the second through hole and coupled with the nut in the internal space.

The battery includes the second through hole and the bolt. The second through hole penetrates the second plate. The bolt is inserted into the second through hole. The bolt is coupled with the nut in the internal space. Therefore, it is easy to connect the second plate and the external terminal using the bolt and the nut. Here, the external terminal is a component provided outside the battery.

The present invention provides a straddled vehicle, including the battery described above.

The straddled vehicle includes the battery described above. As described above, the battery prevents the nut from falling off.

It is preferred in the straddled vehicle described above that
the battery is installed in an inclined posture in the straddled vehicle.

Even when the battery is installed in the inclined posture in the straddled vehicle, the battery prevents the nut from falling off. Rather, when the battery is installed in the inclined posture in the straddled vehicle, it is more useful to prevent the nut from falling off.

For the purpose of illustrating the invention, there are shown in the drawings several forms which are presently preferred, it being understood, however, that the invention is not limited to the precise arrangement and instrumentalities shown.

### Brief description of the drawings

FIG. 1 is a left side view of a straddled vehicle according to an embodiment.
FIG. 2 is a perspective view of a battery.
FIG. 3 is a perspective view of a part of the battery.
FIG. 4 is a side view of a part of the battery.
FIG. 5 is an exploded perspective view of a battery terminal, a bolt, and a nut.
FIG. 6 is a perspective view of the battery terminal and a clip member.
FIG. 7 is a perspective view of the clip member.
FIG. 8 is a perspective view of the clip member.
FIG. 9 is a plan view of the clip member.
FIG. 10 is a cross-sectional view taken along line X-X of FIG. 4.
FIG. 11 is a side view of the battery terminal and the clip member.
FIG. 12 is a side view of the battery terminal and the clip member.

### Embodiments of the invention

A straddled vehicle 1 according to this invention will be described hereinafter with reference to the drawings.

### <1. Outline Construction of Straddled Vehicle 1>

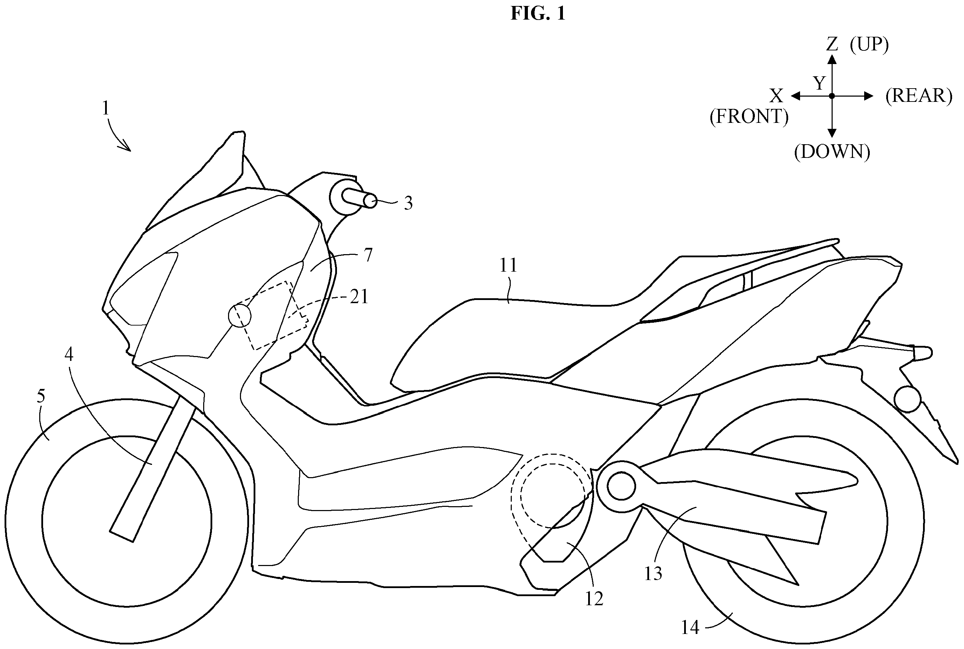

FIG. 1 is a left side view of a straddled vehicle 1 according to an embodiment. The straddled vehicle 1 is classified as a scooter-type vehicle, for example.

FIG. 1 shows a longitudinal direction X, a transverse direction Y, and an up-down direction Z of the scooter type vehicle 1. The longitudinal direction X, transverse direction Y, and up-down direction Z are defined with reference to a driver (also called a rider) riding on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

The straddled vehicle 1 includes a handlebar 3, a front fork 4, and a front wheel 5. A driver of the straddled vehicle 1 grips the handlebar 3. The front fork 4 is connected to the handlebar 3. The front fork 4 extends downward and forward from the handlebar 3. The front wheel 5 is supported by a lower portion of the front fork 4.

The straddled vehicle 1 includes a front cover 7. The front cover 7 is disposed lower than the handlebar 3. The front cover 7 extends from a position above the front wheel 5 to a position behind the front wheel 5 in the side view of the straddled vehicle 1. The front cover 7 covers an upper portion of the front fork 4.

The straddled vehicle 1 includes a seat 11, an engine 12, a swing arm 13, and a rear wheel 14. The seat 11 is disposed more rearward than the handlebar 3. The driver sits on the seat 11. The engine 12 is disposed below the seat 11. The swing arm 13 extends rearward from the engine 12. The rear wheel 14 is supported by the rear portion of the swing arm 13.

The straddled vehicle 1 includes a battery 21. In FIG. 1, the battery 21 is indicated by a broken line. The battery 21 is disposed lower than the handlebar 3. The battery 21 is disposed higher than the front wheel 5. The battery 21 is disposed more forward than the seat 11. The battery 21 overlaps the front cover 11 in the side view of the straddled vehicle 1. The battery 21 is disposed inside the front cover 7. The front cover 11 covers the battery 21.

The battery 21 is installed in the inclined posture in the straddled vehicle 1. When the battery 21 is mounted on the straddled vehicle 1, the battery 21 is inclined.

### <2. Outline of battery 21>

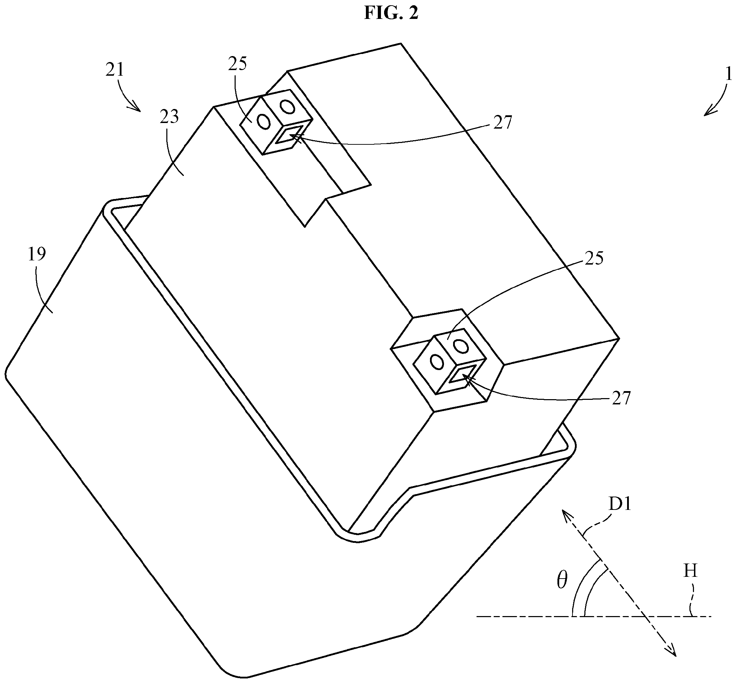

FIG. 2 is a perspective view of the battery 21. The straddled vehicle 1 includes a battery box 19. The battery box 19 accommodates a lower portion of the battery 21.

The battery 21 includes a battery main body 23. The battery main body 23 has a substantially rectangular parallelepiped shape.

The battery 21 includes two battery terminals 25. Each battery terminal 25 is provided on an upper portion of the battery main body 23. The upper portion of the battery main body 23 is, for example, the lid member of the battery 21.

The battery terminal 25 has a rectangular cylindrical shape. The battery terminal 25 is also referred to as a "box-shaped terminal". The battery terminal 25 has an internal space 27. The internal space 27 is positioned inside the battery terminal 25.

The internal space 27 extends substantially linearly. The internal space 27 extends in a first direction D1.

When the battery 21 is installed in the straddled vehicle 1, the first direction D1 is inclined. When the battery 21 is installed in the straddled vehicle 1, the first direction D1 has, for example, an angle θ of 30 degrees or more with respect to a horizontal line H.

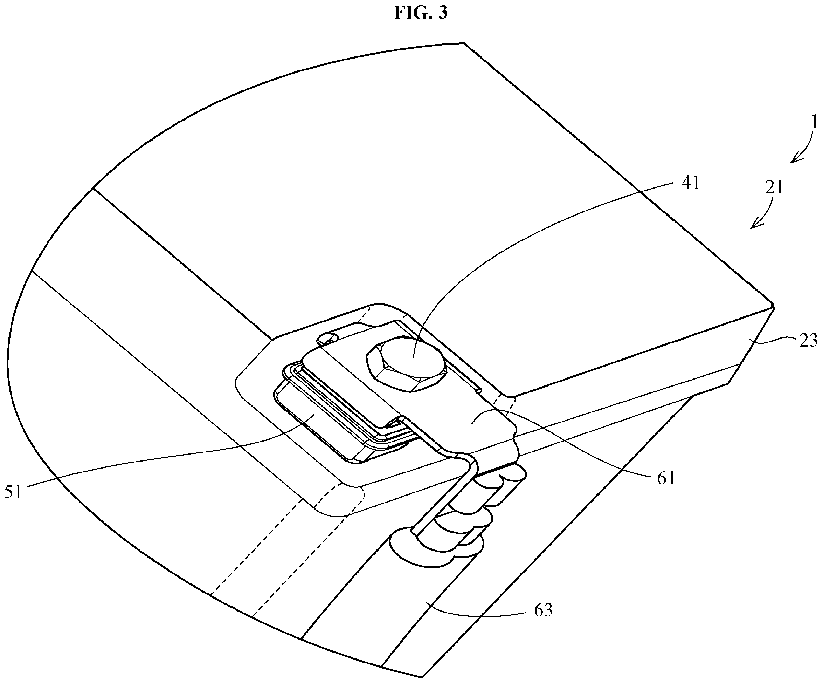

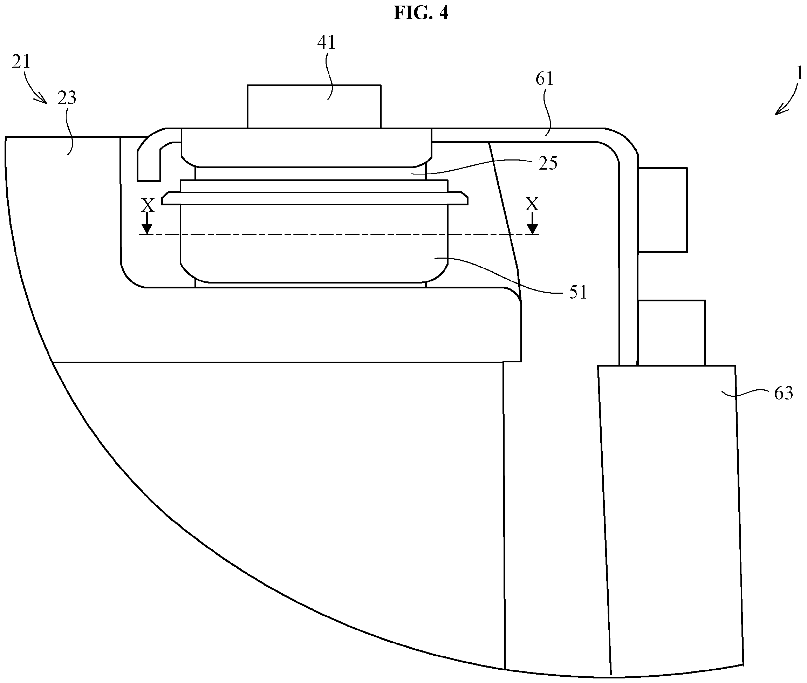

FIG. 3 is a perspective view of a part of the battery 21. FIG. 4 is a side view of a part of the battery 21. The straddled vehicle 1 includes an external terminal 61. The external terminal 61 is connected to the battery terminal 25. The external terminal 61 is a component provided outside the battery 21. The external terminal 61 is, for example, a lead terminal.

The straddled vehicle 1 includes an electric wire 63. The electric wire 63 is connected to the external terminal 61.

The battery 21 includes a bolt 41. The bolt 41 fastens the battery terminal 25 and the external terminal 61.

The battery 21 further includes a clip member 51. The clip member 51 is attached to the battery terminal 25.

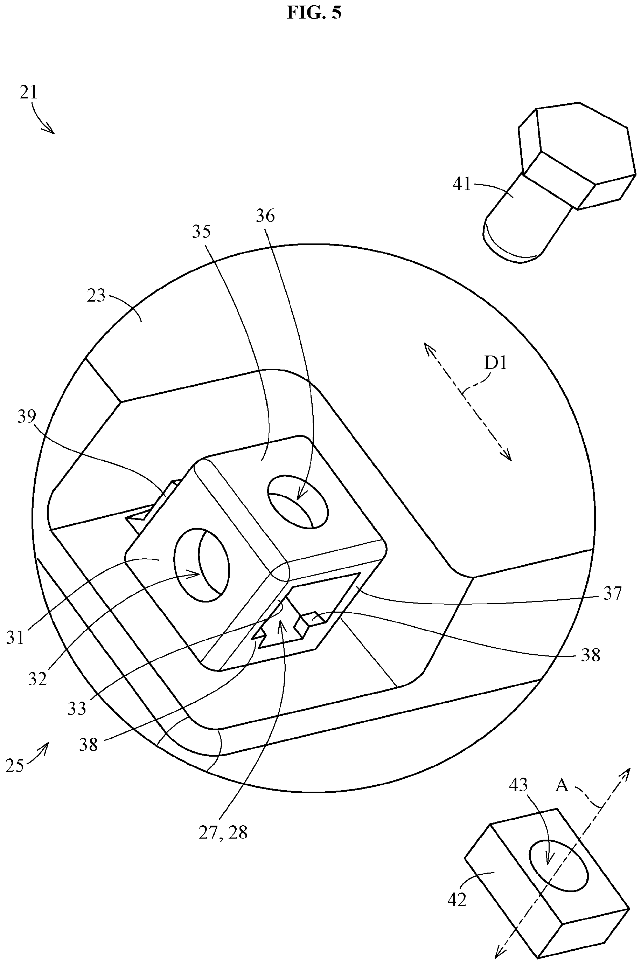

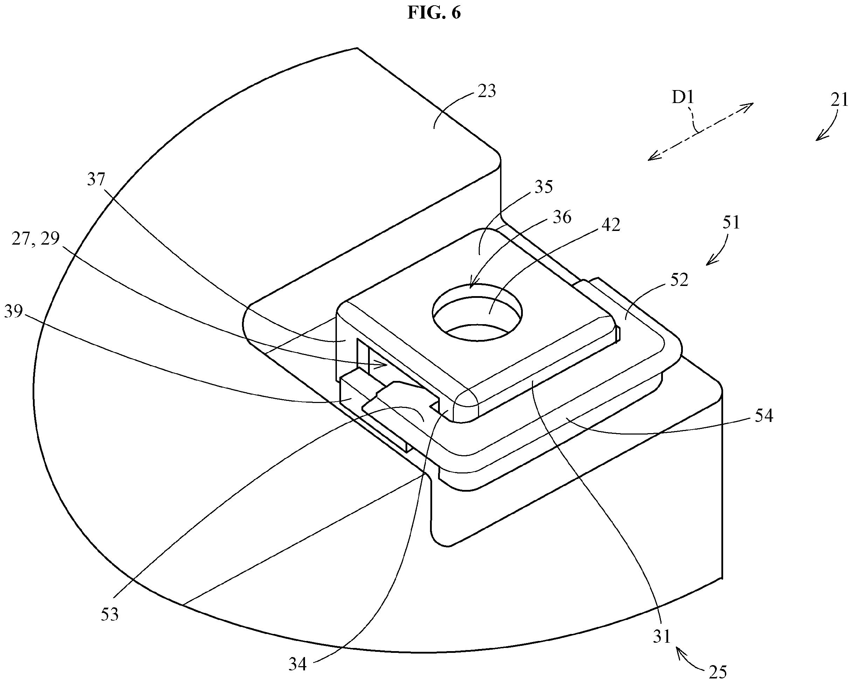

FIG. 5 is an exploded perspective view of the battery terminal 25 and the bolt 41. FIG. 6 is a perspective view of the battery terminal 25 and the clip member 51. The battery terminal 25 includes a first plate 31, a second plate 35, and a third plate 37. Each of the first plate 31, the second plate 35, and the third plate 37 has a flat plate shape. Each of the first plate 31, the second plate 35, and the third plate 37 has a substantially rectangular shape. The first plate 31, the second plate 35, and the third plate 37 each extend in the first direction D1. Each of the first plate 31, the second plate 35, and the third plate 37 is in contact with the internal space 27. The first plate 31, the second plate 35, and the third plate 37 define the internal space 27. The internal space 27 is surrounded by the first plate 31, the second plate 35, and the third plate 37.

The first plate 31 is connected to the battery main body 23. The second plate 35 is connected to the first plate 31. The second plate 35 is substantially orthogonal to the first plate 31. The third plate 37 is connected to the second plate 35. The third plate 37 is substantially orthogonal to the second plate 35. The third plate 37 is substantially parallel to the first plate 31. The third plate 37 faces the first plate 31. The third plate 37 is connected to the battery main body 23. The first plate 31, the second plate 35, and the third plate 37 are integrated. The first plate 31, the second plate 35, and the third plate 37 cannot be separated from each other.

The battery terminal 25 has a first through hole 32. The first through hole 32 penetrates the first plate 31. The first through hole 32 has a substantially circular shape.

The battery terminal 25 has a second through hole 36. The second through hole 36 penetrates the second plate 35. The second through hole 36 has a substantially circular shape.

The internal space 27 penetrates the battery terminal 25.

Refer to FIG. 5. The internal space 27 has a first opening 28. The first opening 28 is defined by the first plate 31, the second plate 35, and the third plate 37. The first opening 28 is surrounded by the first plate 31, the second plate 35, and the third plate 37. The first opening 28 has a substantially rectangular shape.

The first plate 31 has a first side 33. The first side 33 is in contact with the first opening 28.

The battery 21 includes a first convex portion 38. The first convex portion 38 is installed in the first opening 28. The first convex portion 38 is, for example, a step. The first convex portion 38 protrudes upward from the bottom of the first opening 28, for example. The first convex portion 38 is integrated with, for example, the first plate 31 and the third plate 37. The first convex portion 38 and the battery terminal 25 cannot be separated from each other. The first opening 28 is defined by the first plate 31, the second plate 35, the third plate 37, and the first convex portion 38. The first opening 28 is surrounded by the first plate 31, the second plate 35, the third plate 37, and the first convex portion 38.

The battery 21 includes a nut 42. The battery terminal 25 and the nut 42 can be separated from each other. In FIG. 5, the nut 42 is positioned outside the battery terminal 25.

The nut 42 has a nut hole 43. The nut hole 43 extends along an axis A. The nut hole 43 penetrates the nut 42. When the nut 42 is placed in the internal space 27, the nut hole 43 and the second through hole 36 are aligned substantially coaxially. When the nut 42 is placed in the internal space 27, the axis A is perpendicular to the second plate 35. When the nut 42 is placed in the internal space 27, the axis A is orthogonal to the first direction D1.

The first opening 28 is larger than the nut 42. The nut 42 can pass through the first opening 28. The internal space 27 is larger than the nut 42. The internal space 27 can accommodate the nut 42.

The battery terminal 25 and the bolt 41 can be separated from each other. The bolt 41 is inserted into the second through hole 36. The bolt 41 couples with the nut 42 in the internal space 27. Specifically, the bolt 41 is inserted into the nut hole 43 of the nut 42 positioned in the internal space 27. The bolt 41 and the nut 42 are used for connecting the external terminal 61 and the battery terminal 25. When the external terminal 61 and the battery terminal 25 are connected, the second plate 35 and the external terminal 61 are brought into surface contact with each other.

Refer to FIG. 6. The internal space 27 has a second opening 29. The second opening 29 is defined by the first plate 31, the second plate 35, and the third plate 37. The second opening 29 is surrounded by the first plate 31, the second plate 35, and the third plate 37. The second opening 29 has a substantially rectangular shape.

The second opening 29 is smaller than the first opening 28.

The first plate 31 has a second side 34. The second side 34 is in contact with the second opening 29.

The battery 21 includes a second convex portion 39. The second convex portion 39 is installed in the second opening 29. The second convex portion 39 is, for example, a step. The second convex portion 39 protrudes upward from the bottom of the second opening 29, for example. The second convex portion 39 is integrated with, for example, the first plate 31 and the third plate 37. The second convex portion 39 and the battery terminal 25 cannot be separated from each other. The second opening 29 is defined by the first plate 31, the second plate 35, the third plate 37, and the second convex portion 39. The second opening 29 is surrounded by the first plate 31, the second plate 35, the third plate 37, and the second convex portion 39.

The second convex portion 39 is larger than the first convex portion 38.

The clip member 51 and the battery terminal 25 can be separated from each other. The clip member 51 is not integrated with the battery terminal 25. The clip member 51 is attached to and detached from the battery terminal 25.

When the clip member 51 is attached to the battery terminal 25, the clip member 51 prohibits the nut 42 from moving between the internal space 27 and the outside of the battery terminal 25. When the clip member 51 is attached to the battery terminal 25, the clip member 51 prohibits the nut 42 from passing through the first opening 28. When the clip member 51 is attached to the battery terminal 25, the clip member 51 prohibits the nut 42 from passing through the second opening 29.

When the clip member 51 is detached from the battery terminal 25, the clip member 51 allows the nut 42 to move between the internal space 27 and the outside of the battery terminal 25. When the clip member 51 is detached from the battery terminal 25, the clip member 51 allows the nut 42 to pass through the first opening 28. Here, "when the clip member 51 is detached from the battery terminal 25" has the same meaning as "when the clip member 51 is not attached to the battery terminal 25".

The clip member 51 is attached to the first plate 31. The clip member 51 is attached to and detached from the first plate 31.

When the clip member 51 is attached to the battery terminal 25, the clip member 51 does not come into contact with the second plate 35. When the clip member 51 is attached to the battery terminal 25, the clip member 51 is separated from the second plate 35. When the clip member 51 is attached to the battery terminal 25, the clip member 51 does not come into contact with the third plate 37. When the clip member 51 is attached to the battery terminal 25, the clip member 51 is separated from the third plate 37.

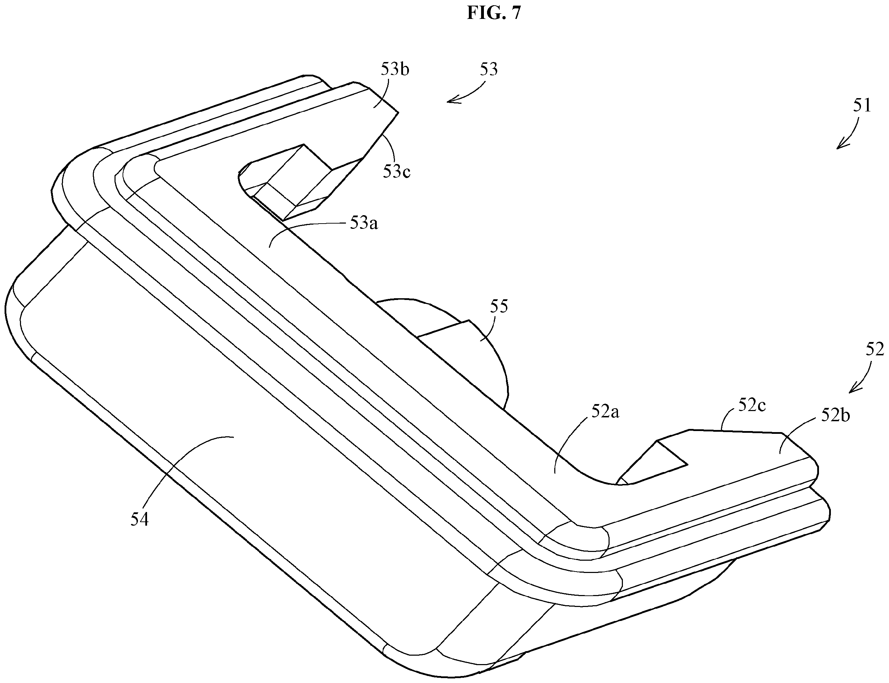

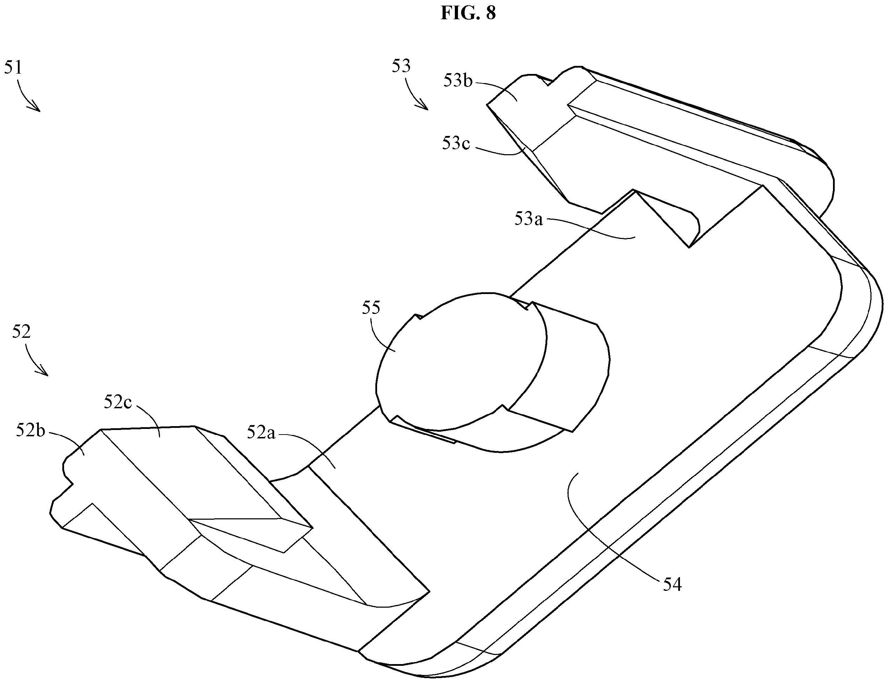

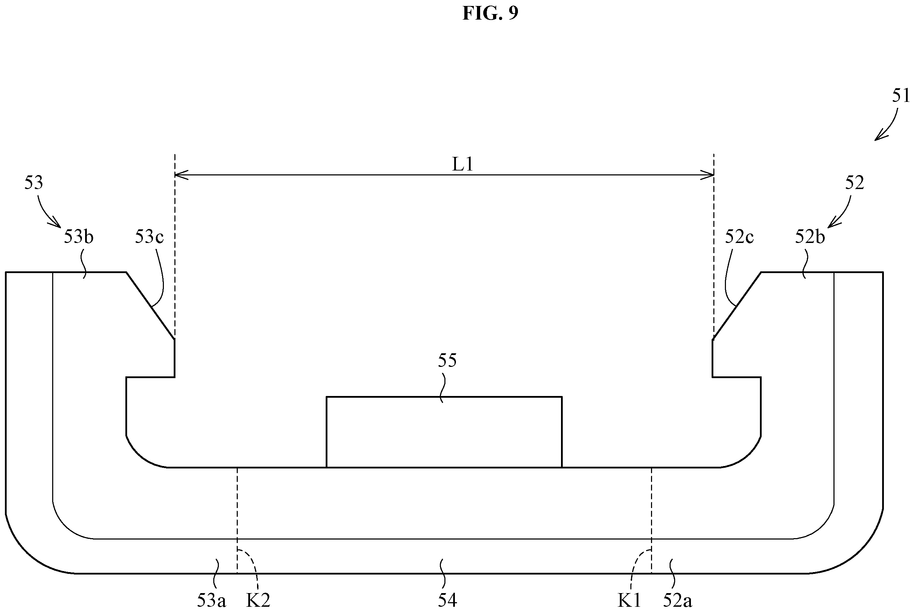

FIGS. 7 and 8 are perspective views of the clip member 51. FIG. 9 is a plan view of the clip member 51. The clip member 51 is made of, for example, synthetic resin. The clip member 51 is one molded product. The clip member 51 cannot be separated into a plurality of members.

The clip member 51 includes a first clamp 52 and a second clamp 53. Each of the first clamp 52 and the second clamp 53 has a hook shape. The first clamp 52 and the second clamp 53 each have a C shape or a U shape. The first clamp 52 and the second clamp 53 face each other. The first clamp 52 and the second clamp 53 are separated from each other.

Refer to FIG. 8. The first clamp 52 is larger than the second clamp 53.

The clip member 51 has a connecting portion 54. The connecting portion 54 connects the first clamp 52 and the second clamp 53. The first clamp 52, the second clamp 53, and the connecting portion 54 are integrated. The first clamp 52, the second clamp 53, and the connecting portion 54 cannot be separated from each other.

FIG. 9 illustrates positions of boundaries K1 and K2 by broken lines. The boundary K1 is a boundary between the first clamp 52 and the connecting portion 54. The boundary K2 is a boundary between the second clamp 53 and the connecting portion 54.

The first clamp 52 has a proximal end 52a and a distal end 52b. The second clamp 53 has a proximal end 53a and a distal end 53b. The connecting portion 54 extends from the proximal end 52a of the first clamp 52 to the proximal end 53a of the second clamp 53.

The first clamp 52 and the second clamp 53 include inclined surfaces 52c and 53c, respectively. The inclined surface 52c is disposed at the distal end 52b of the first clamp 52. The inclined surface 53c is disposed at the distal end 53b of the second clamp 53.

FIG. 9 illustrates a separation distance L1 between the first clamp 52 and the second clamp 53. The separation distance L1 is equal to, for example, the separation distance between the distal end 52b and the distal end 53b.

The clip member 51 is elastically deformable. By applying a force to the clip member 51, the clip member 51 is elastically deformed. For example, by applying a force to the clip member 51, the first clamp 52 and the second clamp 53 move slightly away from each other. For example, by applying a force to the clip member 51, the separation distance L1 between the first clamp 52 and the second clamp 53 slightly increases. For example, by applying a force to the inclined surface 52c, the first clamp 52 is easily elastically deformed. For example, by applying a force to the inclined surface 53c, the second clamp 53 is easily elastically deformed. For example, by applying a force to the inclined surfaces 52c and 53c, the separation distance L1 between the first clamp 52 and the second clamp 53 easily increases. For example, by pressing the inclined surfaces 52c and 53c, the separation distance L1 between the first clamp 52 and the second clamp 53 easily increases.

The clip member 51 further includes a pin 55. The pin 55 is disposed between the first clamp 52 and the second clamp 53. The pin 55 is connected to the connecting portion 54. The pin 55 protrudes from the connecting portion 54. The pin 55 extends linearly from the connecting portion 54. The length of the pin 55 is slightly smaller than the thickness of the first plate 31. The pin 55 has a substantially cylindrical shape. The diameter of the pin 55 is slightly smaller than the diameter of the first through hole 32.

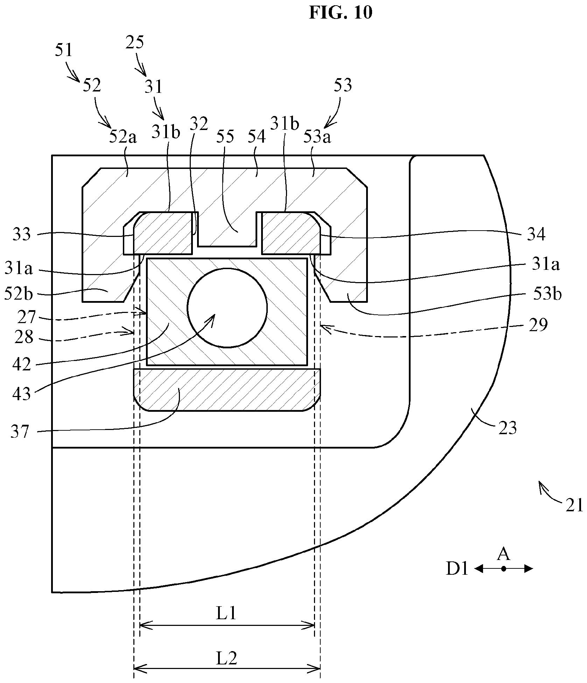

FIG. 10 is a cross-sectional view taken along line X-X of FIG. 4. The internal space 27 extends in a first direction D1. The first opening 28 is positioned at a first end of the internal space 27 in the first direction D1. The second opening 29 is positioned at a second end of the internal space 27 in the first direction D1. The first side 33 is positioned at the first end of the first plate 31 in the first direction D1. The second side 34 is positioned at the second end of the first plate 31 in the first direction D1.

When the clip member 51 is attached to the battery terminal 25, the clip member 51 comes into contact with the first plate 31. When the clip member 51 is attached to the battery terminal 25, the clip member 51 clamps the first plate 31. When the clip member 51 is attached to the battery terminal 25, each of the first clamp 52 and the second clamp 53 clamps the first plate 31. When the clip member 51 is attached to the battery terminal 25, each of the first clamp 52 and the second clamp 53 grips the first plate 31. When the clip member 51 is attached to the battery terminal 25, each of the first clamp 52 and the second clamp 53 holds the first plate 31.

The first plate 31 has an inner surface 31a and an outer surface 31b. The inner surface 31a is in contact with the internal space 27. The outer surface 31b is positioned on the side opposite to the inner surface 31a. The outer surface 31b is not in contact with the internal space 27. The outer surface 31b is in contact with the outside of the battery terminal 25. The outer surface 31b is in contact with an area outside the battery terminal 25. When the clip member 51 is attached to the battery terminal 25, the first clamp 52 and the second clamp 53 are in contact with the inner surface 31a and the outer surface 31b, respectively. When the clip member 51 is attached to the battery terminal 25, the distal ends 52b and 53b are in contact with the inner surface 31a, respectively. When the clip member 51 is attached to the battery terminal 25, the proximal ends 52a and 53a are in contact with the outer surface 31b, respectively.

When the clip member 51 is attached to the battery terminal 25, the first clamp 52 clamps the first side 33, and the second clamp 53 clamps the second side 34. When the clip member 51 is attached to the battery terminal 25, the first clamp 52 grips the first side 33, and the second clamp 53 grips the second side 34. When the clip member 51 is attached to the battery terminal 25, the first clamp 52 holds the first side 33, and the second clamp 53 holds the second side 34.

When the clip member 51 is attached to the battery terminal 25, a part of the first clamp 52 and a part of the second clamp 53 each enter the internal space 27. When the clip member 51 is attached to the battery terminal 25, a part of the first clamp 52 enters the internal space 27 through the first opening 28, and a part of the second clamp 53 enters the internal space 27 through the second opening 29.

Specifically, when the clip member 51 is attached to the battery terminal 25, the distal ends 52b, 53b each enter the internal space 27. When the clip member 51 is attached to the battery terminal 25, the distal end 52b enters the internal space 27 through the first opening 28, and the distal end 53b enters the internal space 27 through the second opening 29.

When the clip member 51 is attached to the battery terminal 25, the clip member 51 can contact the nut 42 in the internal space 27. When the clip member 51 is attached to the battery terminal 25, each of the first clamp 52 and the second clamp 53 can contact the nut 42 in the internal space 27.

FIG. 10 illustrates a distance L2 between the first side 33 and the second side 34. The distance L2 corresponds to the length of the first plate 31 in the first direction D1. The separation distance L1 between the first clamp 52 and the second clamp 53 is shorter than the distance L2 between the first side 33 and the second side 34. The separation distance L1 is slightly shorter than the distance L2.

Although not illustrated, the separation distance L1 between the first clamp 52 and the second clamp 53 is shorter than the separation distance between the first convex portion 38 and the second convex portion 39 in the first direction D1. The separation distance L1 is slightly shorter than the separation distance between the first convex portion 38 and the second convex portion 39 in the first direction D 1.

When the clip member 51 is attached to the battery terminal 25, a movable range of the nut 42 in the internal space 27 is limited to the range between the first clamp 52 and the second clamp 53. That is, when the clip member 51 is attached to the battery terminal 25, the separation distance L1 corresponds to the movable range of the nut 42.

The separation distance L1 is slightly longer than the nut 42. When the nut 42 is placed in the internal space 27, the separation distance L1 is slightly longer than the length of the nut 42 in the first direction D1. When the clip member 51 is attached to the battery terminal 25, the clip member 51 substantially positions the nut 42 with respect to the battery terminal 25. Specifically, when the clip member 51 is attached to the battery terminal 25, the clip member 51 serves to dispose the nut hole 43 substantially coaxially with the second through hole 36. That is, when the clip member 51 is attached to the battery terminal 25, the clip member 51 positions the nut 42 such that the nut hole 43 is positioned coaxially with the second through hole 36.

When the clip member 51 is attached to the battery terminal 25, the connecting portion 54 extends along the first plate 31. When the clip member 51 is attached to the battery terminal 25, the connecting portion 54 extends from the first side 33 to the second side 34. When the clip member 51 is attached to the battery terminal 25, the connecting portion 54 extends in the first direction D 1.

When the clip member 51 is attached to the battery terminal 25, the connecting portion 54 comes into contact with the first plate 31. When the clip member 51 is attached to the battery terminal 25, the connecting portion 54 contacts the outer surface 31b. When the clip member 51 is attached to the battery terminal 25, the connecting portion 54 does not contact the inner surface 31a.

When the clip member 51 is attached to the battery terminal 25, the entire connecting portion 54 is disposed outside the first plate 31. When the clip member 51 is attached to the battery terminal 25, the entire connecting portion 54 is disposed outside the internal space 27.

When the clip member 51 is attached to the battery terminal 25, the pin 55 is inserted into the first through hole 32. When the clip member 51 is attached to the battery terminal 25, the pin 55 is inserted into the first through hole 32 from the outer surface 31b. When the clip member 51 is attached to the battery terminal 25, the pin 55 does not reach the internal space 27. When the clip member 51 is attached to the battery terminal 25, the pin 55 does not reach the inner surface 31a. When the clip member 51 is attached to the battery terminal 25, the pin 55 does not protrude from the inner surface 31a to the internal space 27. When the clip member 51 is attached to the battery terminal 25, the pin 55 does not contact the nut 42 in the internal space 27.

FIG. 10 shows the clip member 51 and the nut 42 as viewed from the axis A of the nut hole 43 of the nut 42 placed in the internal space 27. When the nut 42 is placed in the internal space 27 and the clip member 51 is attached to the battery terminal 25, the clip member 51 does not overlap the nut hole 43 as viewed from the axis A of the nut hole 43. When the nut 42 is placed in the internal space 27 and the clip member 51 is attached to the battery terminal 25, the entire clip member 51 does not overlap the nut hole 43 as viewed from the axis A of the nut hole 43. When the nut 42 is placed in the internal space 27 and the clip member 51 is attached to the battery terminal 25, the clip member 51 does not have a portion overlapping the nut hole 43 as viewed from the axis A of the nut hole 43.

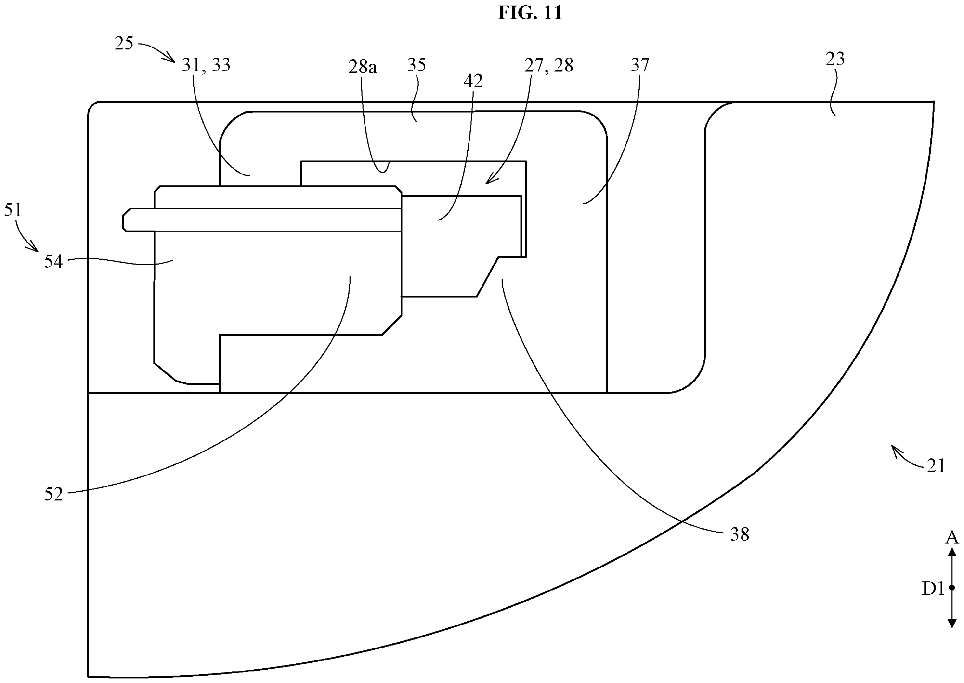

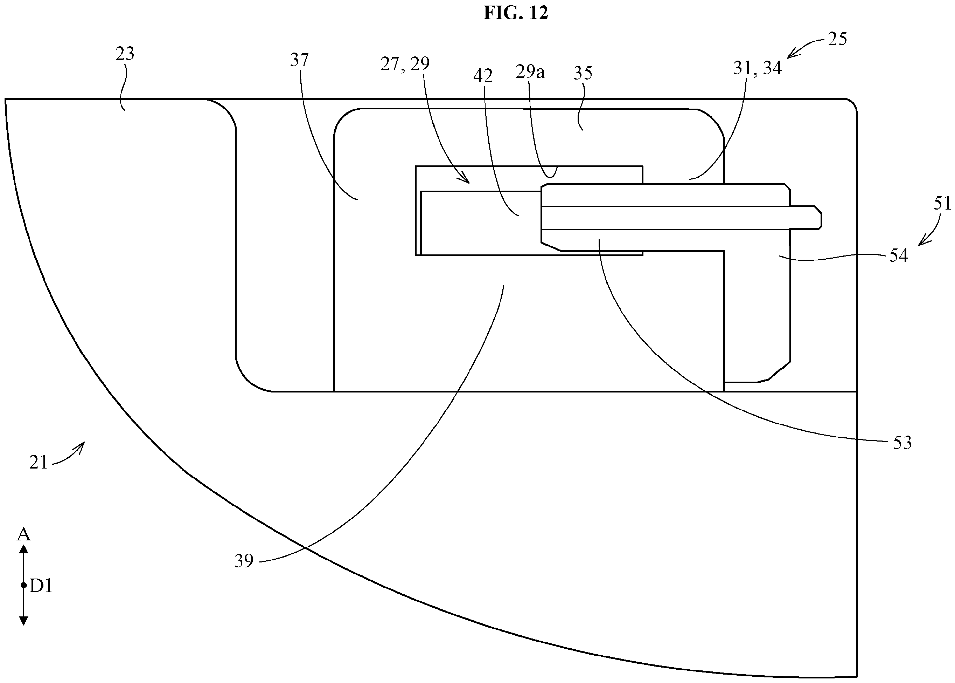

Each of FIG. 11 and FIG. 12 illustrates a side view of the battery terminal 25 and the clip member 51. The first opening 28 is larger than the first clamp 52. The first opening 28 is larger than the distal end 52b of the first clamp 52. The second opening 29 is larger than the second clamp 53. The second opening 29 is larger than the distal end 53b of the second clamp 53. The second opening 29 is smaller than the first clamp 52. The second opening 29 is smaller than the distal end 53b of the first clamp 52.

When the nut 42 is placed in the internal space 27 and the clip member 51 is attached to the battery terminal 25, the clip member 51 does not overlap the second plate 35 as viewed from the first direction D1. When the nut 42 is placed in the internal space 27 and the clip member 51 is attached to the battery terminal 25, the entire clip member 51 does not overlap the second plate 35 as viewed from the first direction D1. When the nut 42 is placed in the internal space 27 and the clip member 51 is attached to the battery terminal 25, the clip member 51 does not have a portion overlapping the second plate 35 as viewed from the first direction D1.

The first direction D1 is an example of a direction orthogonal to the axis A of the nut hole 43. When the nut 42 is placed in the internal space 27 and the clip member 51 is attached to the battery terminal 25, the clip member 51 does not overlap the second plate 35 as viewed from the direction orthogonal to the axis A of the nut hole 43. When the nut 42 is placed in the internal space 27 and the clip member 51 is attached to the battery terminal 25, the entire clip member 51 does not overlap the second plate 35 when viewed from the direction orthogonal to the axis A of the nut hole 43. When the nut 42 is placed in the internal space 27 and the clip member 51 is attached to the battery terminal 25, the clip member 51 does not have a portion overlapping the second plate 35 when viewed from the direction orthogonal to the axis A of the nut hole 43.

When the first direction D1 is horizontal, each of the first plate 31 and the third plate 37 extends upward from the battery main body 23. When the first direction D1 is horizontal, the second plate 35 extends from the upper end of the first plate 31 to the upper end of the third plate 37. That is, when the first direction D1 is horizontal, the second plate 35 is disposed above the first plate 31 and the third plate 37. When the first direction D1 is horizontal, the entire clip member 51 attached to the battery terminal 25 is disposed lower than the second plate 35. When the first direction D1 is horizontal, the entire clip member 51 attached to the battery terminal 25 is disposed lower than the entire second plate 35. When the first direction D1 is horizontal, the entire clip member 51 attached to the battery terminal 25 is disposed lower than an upper end 28a of the first opening 28. When the first direction D1 is horizontal, the entire clip member 51 attached to the battery terminal 25 is disposed lower than an upper end 29a of the second opening 29.

The clip member 51 is attached to the battery terminal 25 by using elastic deformation of the clip member 51. The clip member 51 is attached to the battery terminal 25 without using the adhesive. The clip member 51 is attached to the battery terminal 25 by one-touch operation. The clip member 51 is quickly attached to the battery terminal 25.

The following describes an operation of attaching the clip member 51 to the battery terminal 25. By applying a force to the clip member 51, the clip member 51 is elastically deformed. For example, the separation distance L1 between the first clamp 52 and the second clamp 53 is increased. Then, the clip member 51 is attached to the battery terminal 25 while elastically deforming the clip member 51. For example, the clip member 51 is attached to the battery terminal 25 by pressing the clip member 51 against the battery terminal 25. For example, the clip member 51 is attached to the battery terminal 25 by pressing the connecting portion 54 against the first plate 31. For example, the first clamp 52 is attached to the first plate 31 by pressing the first clamp 52 against the first side 33. For example, the first clamp 52 is attached to the first plate 31 by pressing the inclined surface 52c against the first side 33. For example, the second clamp 53 is attached to the first plate 31 by pressing the second clamp 53 against the second side 34. For example, the second clamp 53 is attached to the first plate 31 by pressing the inclined surface 53c against the second side 34.

By utilizing elastic deformation of the clip member 51, the clip member 51 is detached from the battery terminal 25. The clip member 51 is detached from the battery terminal 25 by one-touch operation. The clip member 51 is quickly detached from the battery terminal 25.

The following describes an operation of removing the clip member 51 from the battery terminal 25. By applying a force to the clip member 51, the clip member 51 is elastically deformed. For example, the separation distance L1 between the first clamp 52 and the second clamp 53 is increased. Then, while elastically deforming the clip member 51, the clip member 51 is removed from the battery terminal 25. For example, the clip member 51 is removed from the battery terminal 25 by pulling the first clamp 52 from the first side 33. For example, the first clamp 52 is removed from the first plate 31 by pulling the first clamp 52 from the first side 33. For example, the clip member 51 is removed from the battery terminal 25 by pulling the second clamp 53 from the second side 34. For example, the second clamp 53 is removed from the first plate 31 by pulling the second clamp 53 from the second side 34.

The connection between the battery terminal 25 and the external terminal 61 includes, for example, the following operations. First, the nut 42 is inserted into the internal space 27. Specifically, the nut 42 is moved from the outside of the battery terminal 25 to the internal space 27 through the first opening 28. Next, the clip member 51 is attached to the battery terminal 25. Finally, the external terminal 61 is connected to the battery terminal 25 using the nut 42 in the internal space 27 and the bolt 41.

The maintenance of the battery 21 includes, for example, replacement of the battery 21. The replacement of the battery 21 includes the following operations. Here, in order to distinguish the used battery 21 from the new battery 21, the used battery 21 and the new battery 21 are referred to as a "used battery 21a" and a "new battery 21b", respectively. First, the external terminal 61 is removed from the battery terminal 25 of the used battery 21a. Next, the used battery 21a is removed from the straddled vehicle 1, and the new battery 21b is installed in the straddled vehicle 1. Here, the nut 42 and the clip member 51 may be taken out from the used battery 21a, and the nut 42 and the clip member 51 may be reused for the new battery 21b. Specifically, the clip member 51 is removed from the battery terminal 25 of the used battery 21a. The nut 42 in the internal space 27 of the used battery 21a is raised from the first convex portion 38, and the nut 42 is moved from the internal space 27 to the outside of the battery terminal 25 through the first opening 28. Then, the nut 42 is inserted into the internal space 27 of the new battery 21b. Further, the clip member 51 is attached to the battery terminal 25 of the new battery 21b. Finally, the nut 42 in the internal space 27 and bolt 41 are used to couple the external terminal 61 to the battery terminal 25 of the new battery 21b.

The maintenance of the battery 21 includes, for example, replacement of the nut 42. The nut 42 is replaced, for example, when the nut 42 is damaged or when the nut 42 is corroded. The replacement of the nut 42 includes the following operations. Here, in order to distinguish between the used nut 42 and the new nut 42, the used nut 42 and the new nut 42 are referred to as a "used nut 42a" and a "new nut 42b", respectively. First, the external terminal 61 is removed from the battery terminal 25. Next, the clip member 51 is removed from the battery terminal 25. The used nut 42a is taken out from the internal space 27 to the outside of the battery terminal 21. Then, the new nut 42b is inserted into the internal space 27. Further, the clip member 51 is attached to the battery terminal 25. Finally, the external terminal 61 is coupled to the battery terminal 25 using the new nut 42b in the internal space 27 and the bolt 41.

### <3. Effect of the embodiment>

The battery 21 includes the battery terminal 25, the nut 42, and the clip member 51. The battery terminal 25 has the internal space 27. The nut 42 is placed in the internal space 27. The clip member 51 is attached to and detached from the battery terminal 25. When the clip member 51 is attached to the battery terminal 25, the clip member 51 prohibits the nut 42 from moving from the internal space 27 to the outside of the battery terminal 25. For example, even when the battery 21 is greatly inclined, the clip member 51 attached to the battery terminal 25 prohibits the nut 42 from falling off from the battery terminal 25. For example, even when the angle θ increases, the clip member 51 attached to the battery terminal 25 prohibits the nut 42 from falling off from the internal space 27. In a state where the clip member 51 is attached to the battery terminal 25, the clip member 51 holds the nut 42 in the internal space 27. In a state where the clip member 51 is attached to the battery terminal 25, the clip member 51 keeps the nut 42 in the internal space 27. Therefore, in a state where the clip member 51 is attached to the battery terminal 25, the battery 21 prevents the nut 42 from falling off.

The clip member 51 is attached to and detached from the battery terminal 25 by using elastic deformation of the clip member 51. Therefore, it is easy to attach the clip member 51 to the battery terminal 25. Specifically, the clip member 51 is attached to the battery terminal 25 with less work and in a short time. Therefore, the battery 21 allows simple connection between the battery terminal 25 and the external terminal 61.

As described above, the clip member 51 is attached to and detached from the battery terminal 25 by using elastic deformation of the clip member 51. Therefore, it is easy to remove the clip member 51 from the battery terminal 25. Specifically, the clip member 51 is removed from the battery terminal 25 with less work and in a short time. When the clip member 51 is detached from the battery terminal 25, the clip member 51 allows the nut 42 to move between the internal space 27 and the outside of the battery terminal 25. Therefore, in a state where the clip member 51 is detached from the battery terminal 25, it is easy to take out the nut 42 from the internal space 27 to the outside of the battery terminal 25. In a state where the clip member 51 is detached from the battery terminal 25, it is easy to insert the nut 42 from the outside of the battery terminal 25 into the internal space 27. Therefore, for example, even after the clip member 51 is attached to the battery terminal 25, it is easy to remove the clip member 51 from the battery terminal 25 and take out the nut 42 from the internal space 27. Therefore, maintenance of the battery 21 is easy. That is, the battery 21 has good maintainability.

As described above, the battery 21 prevents the nut 42 from falling off. Furthermore, the battery 21 allows simple connection between the battery terminal 25 and the external terminal 61. The battery 21 has good maintainability.

The clip member 51 is attached to the battery terminal 25 without using the adhesive. The clip member 51 is in contact with the battery terminal 25 without interposing the adhesive. Therefore, it is easier to attach and detach the clip member 51 to and from the battery terminal 25.

The clip member 51 is elastically deformed. For example, by applying a force to the clip member 51, the clip member 51 is elastically deformed. Therefore, it is easy to use elastic deformation of the clip member 51. Therefore, it is easier to attach and detach the clip member 51 to and from the battery terminal 25.

The clip member 51 is attached to the battery terminal 25 while elastically deforming the clip member 51. Therefore, it is easier to attach the clip member 51 to the battery terminal 25.

The clip member 51 is attached to the battery terminal 25 by pressing the clip member 51 against the battery terminal 25. Therefore, it is easier to attach the clip member 51 to the battery terminal 25.

While elastically deforming the clip member 51, the clip member 51 is removed from the battery terminal 25. Therefore, it is easier to remove the clip member 51 from the battery terminal 25.

When the clip member 51 is attached to the battery terminal 25, the clip member 51 can contact the nut 42 in the internal space 27. Therefore, when the clip member 51 is attached to the battery terminal 25, it is easy for the clip member 51 to prohibit the nut 42 from moving from the internal space 27 to the outside of the battery terminal 25.

The battery terminal 25 includes the first plate 31 and the second plate 35. The second plate 35 is connected to the first plate 31. The second plate 35 is substantially orthogonal to the first plate 31. The first plate 31 is in contact with the internal space 27. The second plate 35 is in contact with the internal space 27. In other words, each of the first plate 31 and the second plate 35 defines the internal space 27. Therefore, the battery terminal 25 suitably has the internal space 27.

The clip member 51 is attached to and detached from the first plate 31. Therefore, the clip member 51 is suitably attached to and detached from the battery terminal 25.

When the clip member 51 is attached to the battery terminal 25, the clip member 51 comes into contact with the first plate 31. Therefore, it is easy to attach and detach the clip member 51 to and from the first plate 31.

When the clip member 51 is attached to the battery terminal 25, the clip member 51 is separated from the second plate 35. In other words, when the clip member 51 is attached to the battery terminal 25, the clip member 51 does not come into contact with the second plate 35. In other words, when the clip member 51 is attached to the battery terminal 25, the clip member 51 is not attached to the second plate 35. Therefore, it is easy to attach and detach the clip member 51 to and from the battery terminal 25.

The clip member 51 includes the first clamp 52. When the clip member 51 is attached to the battery terminal 25, the first clamp 52 clamps the first plate 31. Therefore, it is easy to attach and detach the clip member 51 to and from the battery terminal 25.

When the clip member 51 is attached to the battery terminal 25, the first clamp 52 grips the first plate 31. Therefore, it is easy to attach and detach the clip member 51 to and from the battery terminal 25.

When the clip member 51 is attached to the battery terminal 25, the first clamp 52 holds the first plate 31. Therefore, it is easy to attach and detach the clip member 51 to and from the battery terminal 25.

The first clamp 52 has a hook shape. Therefore, it is easy for the first clamp 52 to clamp the first plate 31.

The first clamp 52 has a C shape or a U shape. Therefore, it is easy for the first clamp 52 to clamp the first plate 31.

The first plate 31 has an inner surface 31a and an outer surface 31b. The inner surface 31a is in contact with the internal space 27. The outer surface 31b is opposite the inner surface 31a. The outer surface 31b is not in contact with the internal space 27. The outer surface 31b is in contact with the outside of the battery terminal 25. When the clip member 51 is attached to the battery terminal 25, the first clamp 52 contacts both the inner surface 31a of the first plate 31 and the outer surface 31b of the first plate 31. Therefore, it is easy for the first clamp 52 to clamp the first plate 31.

When the clip member 51 is attached to the battery terminal 25, a part of the first clamp 52 enters the internal space 27. Therefore, when the clip member 51 is attached to the battery terminal 25, it is easy for the first clamp 52 to clamp the first plate 31. Further, when the clip member 51 is attached to the battery terminal 25, it is easy for the first clamp 52 to prohibit the nut 42 from moving from the internal space 27 to the outside of the battery terminal 25.

The first clamp 52 includes the inclined surface 52c. Therefore, the first clamp 52 is easily elastically deformed by applying a force to the inclined surface 52c.

The inclined surface 52c is disposed at the distal end 52b of the first clamp 52. Therefore, it is easy to apply a force to the inclined surface 52c. For example, only by pressing the first clamp 52 against the first plate 31, a force is applied to the inclined surface 52c. As a result, the first clamp 52 is easily elastically deformed by applying a force to the inclined surface 52c.

The clip member 51 includes the second clamp 53. When the clip member 51 is attached to the battery terminal 25, the second clamp 53 clamps the first plate 31. Therefore, it is easy to attach and detach the clip member 51 to and from the battery terminal 25.

The clip member 51 includes the connecting portion 54. The connecting portion 54 connects the first clamp 52 and the second clamp 53. Therefore, it is easy to attach and detach both the first clamp 52 and the second clamp 53 to and from the first plate 31. Therefore, it is easier to attach and detach the clip member 51 to and from the battery terminal 25.

When the clip member 51 is attached to the battery terminal 25, the second clamp 53 grips the first plate 31. Therefore, it is easy to attach and detach the clip member 51 to and from the battery terminal 25.

When the clip member 51 is attached to the battery terminal 25, the second clamp 53 holds the first plate 31. Therefore, it is easy to attach and detach the clip member 51 to and from the battery terminal 25.

The second clamp 53 has a hook shape. Therefore, it is easy for the second clamp 53 to clamp the first plate 31.

The second clamp 53 has a C shape or a U shape. Therefore, it is easy for the second clamp 53 to clamp the first plate 31.

When the clip member 51 is attached to the battery terminal 25, the second clamp 53 comes into contact with the inner surface 31a of the first plate 31 and the outer surface 31b of the first plate 31. Therefore, it is easy for the second clamp 53 to clamp the first plate 31.

When the clip member 51 is attached to the battery terminal 25, a part of the second clamp 53 enters the internal space 27. Therefore, when the clip member 51 is attached to the battery terminal 25, it is easy for the second clamp 53 to clamp the first plate 31. Further, when the clip member 51 is attached to the battery terminal 25, it is easy for the second clamp 53 to prohibit the nut 42 from moving from the internal space 27 to the outside of the battery terminal 25.

The second clamp 53 includes the inclined surface 53c. Therefore, the second clamp 53 is easily elastically deformed by applying a force to the inclined surface 53c.

The inclined surface 53c is disposed at the distal end 53b of the second clamp 53. Therefore, it is easy to apply a force to the inclined surface 53c. For example, only by pressing the second clamp 53 against the first plate 31, a force is applied to the inclined surface 53c.

When the clip member 51 is attached to the battery terminal 25, the connecting portion 54 extends along the first plate 31. Therefore, it is easier for the first clamp 52 to clamp the first plate 31. It is easier for the second clamp 53 to clamp the first plate 31.

When the clip member 51 is attached to the battery terminal 25, the connecting portion 54 comes into contact with the first plate 31. Therefore, it is easier for the first clamp 52 to clamp the first plate 31. It is easier for the second clamp 53 to clamp the first plate 31.

When the clip member 51 is attached to the battery terminal 25, the connecting portion 54 contacts the outer surface 31b of the first plate 31. Therefore, it is easier for the first clamp 52 to clamp the first plate 31. It is easier for the second clamp 53 to clamp the first plate 31. Further, when the clip member 51 is attached to the battery terminal 25, the connecting portion 54 does not interfere with the nut 42 placed in the internal space 27.

When the clip member 51 is attached to the battery terminal 25, the entire connecting portion 54 is disposed outside the first plate 31. Therefore, when the clip member 51 is attached to the battery terminal 25, the connecting portion 54 does not interfere with the nut 42 placed in the internal space 27.

When the clip member 51 is attached to the battery terminal 25, the entire connecting portion 54 is disposed outside the internal space 27. Therefore, when the clip member 51 is attached to the battery terminal 25, the connecting portion 54 does not interfere with the nut 42 placed in the internal space 27.

When the clip member 51 is attached to the battery terminal 25, the connecting portion 54 does not contact the inner surface 31a of the first plate 31. Therefore, when the clip member 51 is attached to the battery terminal 25, the connecting portion 54 does not interfere with the nut 42 placed in the internal space 27.

The internal space 27 has the first opening 28 and the second opening 29. The first opening 28 is positioned at the first end of the internal space 27. The second opening 29 is positioned at the second end of the internal space 27. The first plate 31 includes the first side 33 and the second side 34. The first side 33 is in contact with the first opening 28. The second side 34 is in contact with the second opening 29. When the clip member 51 is attached to the battery terminal 25, the first clamp 52 clamps the first side 33, and the second clamp 53 clamps the second side 34. Therefore, when the clip member 51 is attached to the battery terminal 25, the clip member 51 clamps both the first side 33 and the second side 34. Therefore, the clip member 51 is firmly attached to the battery terminal 25.

When the clip member 51 is attached to the battery terminal 25, the connecting portion 54 extends from the first side 33 to the second side 34. Therefore, it is easy to position the first clamp 52 on the first side 33. Therefore, it is easy for the first clamp 52 to clamp the first side 33. Similarly, it is easy to position the second clamp 53 on the second side 34. Therefore, it is easy for the second clamp 53 to clamp the second side 34.

When the clip member 51 is attached to the battery terminal 25, a part of the first clamp 52 enters the internal space 27 through the first opening 28. Therefore, it is easy for the first clamp 52 to clamp the first side 33. Further, when the clip member 51 is attached to the battery terminal 25, it is easy for the first clamp 52 to prohibit the nut 42 from passing through the first opening 28. For example, when the clip member 51 is attached to the battery terminal 25, it is easy for the first clamp 52 to prohibit the nut 42 from moving from the internal space 27 to the outside of the battery terminal 25 through the first opening 28.

When the clip member 51 is attached to the battery terminal 25, a part of the second clamp 53 enters the internal space 27 through the second opening 29. Therefore, it is easy for the second clamp 53 to clamp the second side 34. Further, when the clip member 51 is attached to the battery terminal 25, it is easy for the second clamp 53 to prohibit the nut 42 from passing through the second opening 29. For example, when the clip member 51 is attached to the battery terminal 25, it is easy for the second clamp 53 to prohibit the nut 42 from moving from the internal space 27 to the outside of the battery terminal 25 through the second opening 29.

When the clip member 51 is attached to the battery terminal 25, each of the first clamp 52 and the second clamp 53 can contact the nut 42 of the internal space 27. Therefore, when the clip member 51 is attached to the battery terminal 25, it is easy for the clip member 51 to prohibit the nut 42 from moving from the internal space 27 to the outside of the battery terminal 25.

When the clip member 51 is attached to the battery terminal 25, a movable range of the nut 42 in the internal space 27 is limited to the range between the first clamp 52 and the second clamp 53. That is, when the clip member 51 is attached to the battery terminal 25, the separation distance L1 between the first clamp 52 and the second clamp 53 corresponds to the movable range of the nut 42. Here, the separation distance L1 between the first clamp 52 and the second clamp 53 is shorter than the distance L2 between the first side 33 and the second side 34. Therefore, when the clip member 51 is attached to the battery terminal 25, the movable range of the nut 42 is relatively small. Therefore, when the clip member 51 is attached to the battery terminal 25, the clip member 51 appropriately limits the movement of the nut 42 in the internal space 27.

The first opening 28 is larger than the first clamp 52. Therefore, the first clamp 52 can be inserted into the first opening 28. Therefore, the first clamp 52 is allowed to clamp the first side 33. The first opening 28 allows the first clamp 52 to clamp the first side 33.

The second opening 29 is larger than the second clamp 53. Therefore, the second clamp 53 can be inserted into the second opening 29. Therefore, the second clamp 53 is allowed to clamp the second side 34. The second opening 29 allows the second clamp 53 to clamp the second side 34.

The second opening 29 is smaller than the first clamp 52. Therefore, the first clamp 52 cannot be inserted into the second opening 29. Therefore, the first clamp 52 is prohibited from clamping the second side 34. The second opening 29 prohibits the first clamp 52 from clamping the second side 34. Here, the first clamp 52 clamping the second side 34 corresponds to erroneous connection between the clip member 51 and the first plate 31. Therefore, erroneous connection between the clip member 51 and the first plate 31 is reliably prevented.

The second opening 29 is smaller than the first opening 28. Therefore, it is easy to make the second opening 29 smaller than the first clamp 52.

The first clamp 52 is larger than the second clamp 53. Therefore, it is easy to make the first clamp 52 larger than the second opening 29.

The battery terminal 25 has the first through hole 32. The first through hole 32 penetrates the first plate 31. The clip member 51 includes the pin 55. When the clip member 51 is attached to the battery terminal 25, the pin 55 is inserted into the first through hole 32. Therefore, when the pin 55 is inserted into the first through hole 32, the pin 55 restricts the movement of the clip member 51 with respect to the battery terminal 25. When the pin 55 is inserted into the first through hole 32, the pin 55 holds the clip member 51 at an appropriate position with respect to the first plate 31.

The battery terminal 25 has the second through hole 36. The second through hole 36 penetrates the second plate 35. The battery 21 includes a bolt 41. The bolt 41 is inserted into the second through hole 36. The bolt 41 is coupled with the nut 42 in the internal space 27. Therefore, it is easy to connect the second plate 35 and the external terminal 61 using the bolt 41 and the nut 42.

The nut 42 has a nut hole 43. When the nut 42 is placed in the internal space 27 and the clip member 51 is attached to the battery terminal 25, the clip member 51 does not overlap the nut hole 43 as viewed from the axis A of the nut hole 43. When the nut 42 is placed in the internal space 27 and the clip member 51 is attached to the battery terminal 25, the entire clip member 51 does not overlap the nut hole 43 as viewed from the axis A of the nut hole 43. Therefore, when the clip member 51 is attached to the battery terminal 25, the clip member 51 does not interfere with the nut hole 43. Here, the bolt 41 is inserted into the nut hole 43. Therefore, when the clip member 51 is attached to the battery terminal 25, the clip member 51 does not interfere with the bolt 41 inserted into the nut hole 43. Therefore, even when the clip member 51 is attached to the battery terminal 25, it is easy to couple the bolt 41 to the nut 42. Even when the clip member 51 is attached to the battery terminal 25, it is easy to remove the bolt 41 from the nut 42.

When the nut 42 is placed in the internal space 27 and the clip member 51 is attached to the battery terminal 25, the clip member 51 does not overlap the second plate 35 as viewed from the direction orthogonal to the axis A of the nut hole 43. When the nut 42 is placed in the internal space 27 and the clip member 51 is attached to the battery terminal 25, the entire clip member 51 does not overlap the second plate 35 when viewed from the direction orthogonal to the axis A of the nut hole 43. Here, the direction orthogonal to the axis A of the nut hole 43 is, for example, the first direction D1. The internal space 27 extends in a first direction D1. Therefore, when the clip member 51 is attached to the battery terminal 25, the clip member 51 does not interfere with the second plate 35. Therefore, when the clip member 51 is attached to the battery terminal 25, the clip member 51 does not interfere with the external terminal 61 connected to the second plate 35. Therefore, even when the clip member 51 is attached to the battery terminal 25, it is easy to attach the external terminal 61 to the second plate 35. Even when the clip member 51 is attached to the battery terminal 25, it is easy to remove the external terminal 61 from the second plate 35.

When the clip member 51 is attached to the battery terminal 25, the clip member 51 serves to dispose the nut hole 43 substantially coaxially with the second through hole 36. In other words, when the clip member 51 is attached to the battery terminal 25, the clip member 51 positions the nut 42 such that the nut hole 43 is positioned substantially coaxially with the second through hole 36. Therefore, when the clip member 51 is attached to the battery terminal 25, the bolt 41 inserted into the second through hole 36 is easily coupled to the nut 41 in the internal space 27.

The straddled vehicle 1 includes a battery 21. As described above, the battery 21 prevents the nut 42 from falling off.

The battery 21 is installed in the inclined posture in the straddled vehicle 1. When the battery 21 is installed in the straddled vehicle 1, the battery 21 is in the inclined posture. Even when the battery 21 is installed in the inclined posture in the straddled vehicle 1, the battery 21 prevents the nut 42 from falling off. Rather, when the battery 21 is installed in the inclined posture in the straddled vehicle 1, it is more useful to prevent the nut 42 from falling off. Rather, when the battery 21 is installed in the inclined posture in the straddled vehicle 1, the battery 21 that prevents the nut 42 from falling off is more useful.

When the battery 21 is installed in the straddled vehicle 1, the first direction D1 has, for example, an angle θ of 30 degrees or more with respect to a horizontal line H. Even when the angle θ formed by the first direction D1 and the horizontal line H is 30 degrees or more, the battery 21 prevents the nut 42 from falling off. Rather, when the angle θ is 30 degrees or more, it is more useful to prevent the nut 42 from falling off. Rather, when the angle θ is 30 degrees or more, the battery 21 that prevents the nut 42 from falling off is more useful.

The straddled vehicle 1 includes an external terminal 61. The external terminal 61 is connected to the battery terminal 25. As described above, the battery 21 prevents the nut 42 from falling off. Therefore, it is easy to attach and detach the battery terminal 25 and the external terminal 61.

### <6. Modifications>

This invention is not limited to the foregoing embodiment, but may be modified as follows.
(1) In the present embodiment, the clip member 51 includes the second clamp 53, the connecting portion 54, and the pin 55. However, the present invention is not limited to this. For example, at least one of the second clamp 53, the connecting portion 54, and the pin 55 may be omitted.
(2) In the present embodiment, the battery terminal 25 includes the third plate 37. However, the present invention is not limited to this. For example, the battery terminal 25 may not include the third plate 37.
(3) In the present embodiment, the angle θ formed by the first direction D1 and the horizontal line H is 30 degrees or more. However, the present invention is not limited to this. The angle θ may be appropriately changed. For example, the angle θ may be less than 30 degrees.
(4) In the present embodiment, the battery 21 is installed in the inclined posture in the straddled vehicle 1. However, the present invention is not limited to this. For example, the posture of the battery 21 mounted on the straddled vehicle 1 may be appropriately changed. When the battery 21 is mounted on the straddled vehicle 1, the battery 21 may not be inclined. When the battery 21 is mounted on the straddled vehicle 1, the battery 21 may be in a horizontal posture.
(5) In the present embodiment, the battery 21 includes the first convex portion 38 and the second convex portion 39. However, the present invention is not limited to this. For example, at least one of the first convex portion 38 and the second convex portion 39 may be omitted.
(6) In the present embodiment, a scooter-type vehicle as the straddled vehicle 1 is exemplified. However, the present invention is not limited thereto. For example, the straddled vehicle 1 may be changed to other types of vehicles such as a street type, a sports type, an off-road type, and an all-terrain vehicle.
(7) In the present embodiment, the number of front wheels 5 is one. However, the present invention is not limited to this. The number of front wheels 5 may be two. In the embodiment, the number of rear wheels 14 is one. However, the present invention is not limited to this. The number of rear wheels 14 may be two.
(8) The foregoing embodiment and each of the modified embodiments described in paragraphs (1) to (7) above may be further varied as appropriate by replacing or combining their constructions with the constructions of the other modified embodiments.

## Claims

1. A battery (21) comprising:
a battery terminal (25) having an internal space (27);
a nut (42) placed in the internal space (27); and
a clip member (51) to be attached to and detached from the battery terminal (25) by using elastic deformation of the clip member (51); wherein
when the clip member (51) is attached to the battery terminal (25), the clip member (51) prohibits the nut (42) from moving from the internal space (27) to the outside of the battery terminal (25), and
when the clip member (51) is detached from the battery terminal (25), the clip member (51) allows the nut (42) to move from the internal space (27) to the outside of the battery terminal (25).

2. The battery (21) according to claim 1, wherein
the battery terminal (25) includes
a first plate (31) that is in contact with the internal space (27), and
a second plate (35) that is connected to the first plate (31), is substantially orthogonal to the first plate (31), and is in contact with the internal space (27), wherein
the clip member (51) is attached to and detached from the first plate (31).

3. The battery (21) according to claim 2, wherein
the clip member (51) includes
a first clamp (52), and
when the clip member (51) is attached to the battery terminal (25), the first clamp (52) clamps the first plate (31).

4. The battery (21) according to claim 3, wherein
the first clamp (52) has a hook shape.

5. The battery (21) according to claim 3 or 4, wherein
the first plate (31) includes
an inner surface (31a) that is in contact with the internal space (27), and
an outer surface (31b) opposite the inner surface (31a), wherein
when the clip member (51) is attached to the battery terminal (25), the first clamp (52) is in contact with the inner surface (31a) of the first plate (31) and the outer surface (31b) of the first plate (31).

6. The battery (21) according to any one of claims 3 to 5, wherein
when the clip member (51) is attached to the battery terminal (25), a part of the first clamp (52) enters the internal space (27).

7. The battery (21) according to any one of claims 3 to 6, wherein
the clip member (51) includes
a second clamp (53), and
a connecting portion (54) that connects the first clamp (52) and the second clamp (53), wherein
when the clip member (51) is attached to the battery terminal (25), the second clamp (53) clamps the first plate (31).

8. The battery (21) according to claim 7, wherein
the internal space (27) includes
a first opening (28) positioned at a first end of the internal space (27), and
a second opening (29) positioned at a second end of the internal space (27), the first plate (31) includes
a first side (33) that is in contact with the first opening (28), and
a second side (34) that is in contact with the second opening (29), wherein when the clip member (51) is attached to the battery terminal (25), the first clamp (52) clamps the first side (33), and the second clamp (53) clamps the second side (34).

9. The battery (21) according to claim 8, wherein
when the clip member (51) is attached to the battery terminal (25), a part of the first clamp (52) enters the internal space (27) through the first opening (28), and a part of the second clamp (53) enters the internal space (27) through the second opening (29).

10. The battery (21) according to claim 8 or 9, wherein
a separation distance (L1) between the first clamp (52) and the second clamp (53) is shorter than a distance (L2) between the first side (33) and the second side (34).

11. The battery (21) according to claim 10, wherein
the first opening (28) is larger than the first clamp (52), and
the second opening (29) is larger than the second clamp (53) and smaller than the first clamp (52).

12. The battery (21) according to any one of claims 2 to 11, wherein
the battery terminal (25) has a first through hole (32) penetrating the first plate (31),
the clip member (51) includes a pin (55), and
when the clip member (51) is attached to the battery terminal (25), the pin (55) is inserted into the first through hole (32).

13. The battery (21) according to any one of claims 2 to 12, wherein
the battery terminal (25) has a second through hole (36) penetrating the second plate (35), and
the battery (21) includes
a bolt (41) inserted into the second through hole (36) and coupled with the nut (42) in the internal space (27).

14. A straddled vehicle (1) comprising
the battery (21) according to any of claims 1 to 13.

15. The straddled vehicle (1) according to claim 14, wherein
the battery (21) is installed in an inclined posture in the straddled vehicle (1).
